**Europäisches Patentamt**

(19) **European Patent Office**

**Office européen des brevets**

(11) Numéro de publication: **0 116 504**
**B1**

(12) **FASCICULE DE BREVET EUROPEEN**

(45) Date de publication du fascicule du brevet:
**03.06.87**

(21) Numéro de dépôt: **84400235.2**

(22) Date de dépôt: **03.02.84**

(51) Int. Cl.⁴: **A 01 K 97/00**

(54) **Dégorgeoir.**

(30) Priorité: **07.02.83 FR 8302160**

(43) Date de publication de la demande:
**22.08.84 Bulletin 84/34**

(45) Mention de la délivrance du brevet:
**03.06.87 Bulletin 87/23**

(84) Etats contractants désignés:
**AT BE CH DE FR GB IT LI LU NL SE**

(56) Documents cités:
**FR - A - 1 045 959**
**FR - A - 1 129 317**
**FR - A - 1 291 992**
**FR - A - 1 520 675**
**US - A - 2 493 142**
**US - A - 2 797 523**
**US - A - 2 847 793**

(73) Titulaire: **SOCIETE REALISTIC SARL, 260 Boulevard de Reims, F-59100 Roubaix (FR)**
Titulaire: **Chiarello, Virgilio, 28 rue des Chardonnerêts, F-62160 Bully les Mines (FR)**

(72) Inventeur: **Dussart, Didier, 58 Résidence Cheverny, F-59115 Leers (FR)**
Inventeur: **Chiarello, Virgillo, 28 rue des Chardonnerets, F-62160 Bully les Mines (FR)**

(74) Mandataire: **Ecrepont, Robert, CABINET ECREPONT ROBERT 12, Place Simon Vollant, F-59800 Lille (FR)**

## Description

L'invention se rapporte à un dégorgeoir.

Les dégorgeoirs, qui sont des ustensiles servant à retirer un hameçon de la gorge d'un poisson consistent en une tige tenue à la main par l'une de ses extrémités et pourvue à son autre extrémité d'un guide fil.

Pour retirer un hameçon généralement invisible on insère tout d'abord, dans le guide fil, le fil au bout duquel est fixé l'hameçon puis en glissant le guide fil sur le fil, on fait progresser l'ustensile dans la gorge du poisson jusqu'à ce que le guide fil rencontre l'hameçon. A ce moment là, par traction sur le fil, le pêcheur appelle la hampe à l'intérieur du guide fil jusqu'à coincement de l'ardillon puis l'ensemble est retiré de la gorge en manœuvrant le dégorgeoir de manière à éviter qu'au passage l'ardillon s'accroche dans les chairs et provoque dans le fil une tension allant jusqu'à sa rupture.

Une telle rupture est en effet ce qu'il faut éviter à tout prix car, notamment dans les concours, elle ferait perdre au pêcheur tout le temps nécessaire à la remise en état.

A ce jour, on connaît de nombreux dégorgeoirs, l'un de ces dégorgeoirs (FR-A-1 291 992) est constitué d'une seule pièce allongée terminée par une tête qui présente le guide fil qui comprend, d'une part, un logement pour ce fil consistant en un orifice qui, partant de l'extrémité de la tête débouche latéralement à une certaine distance de la dite extrémité de la tête et, d'autre part, une ouverture laissant au fil un accès rapide vers le logement et consistant en une fente étroite raccordant l'orifice à la surface extérieure de la tête.

Malgré l'étroitesse de l'ouverture, cell-ci permet un dégagement accidentel de la ligne, ce qui exige du pêcheur de s'y reprendre en plusieurs fois d'où à nouveau une perte de temps.

Un autre de ces dégorgeoirs (FR-A-1 520 675) comprend, associé à un manche, un corps tubulaire qui présente à son extrémité le guide fil comprenant un logement pour le fil consistant en une simple fente traversant la paroi tubulaire sur une certaine longueur à partir de l'extrémité à laquelle extrémité, l'entrée du logement, qui se confond alors avec l'ouverture laissant au fil un accès vers le logement, et contrôlé par un élément élastique, ce qui toutefois ne supprime pas tous les risques car cet élément élastique soit, bloque assez efficacement la sortie du fil mais exige alors pour l'entrée de ce fil des efforts pouvant aussi rompre le fil, soit, ne gêne pas l'entrée du fil mais alors n'en gêne pas non plus la sortie qui se produit généralement bien avant que le guide soit parvenu au fond de la gorge du poisson.

Dans ce dégorgeoir, il est prévu d'utiliser un coulisseau de coincement énergique de la hampe de l'hameçon dans le tube pour éviter son dégagement en cas d'accrochage de l'ardillon dans les chairs. Ce coincement ajoute un risque de rupture du fil et de déformation de l'hameçon.

Pour remédier à ces inconvénients, un autre dégorgeoir connu à ce jour (FR-A-1 129 317) comprend deux tubes fendus immobilisés en translation l'un par rapport à l'autre mais tournant l'un autour de l'autre et parmi lesquels le tube interne présente non seulement à son extrémité mais sur toute sa longueur le guide fil qui comprend, d'une part, un logement consistant en l'orifice longitudinal du tube intérieur et, d'autre part, une ouverture laissant au fil accès vers le logement et consistant tant en la fente longitudinale de ce tube interne qu'en celle du tube externe, qu'il suffit alors de tourner autour de l'axe du tube interne soit pour mettre les fentes en concordance et dégager l'accès au logement, soit au contraire pour les déphaser et interdire le dit accès.

Les fentes sont délimitées transversalement par deux faces contenues dans des plans passant par les axes des tubes. Ce dégorgeoir nécessite toutefois que le fil traverse sur toute sa longueur le dégorgeoir et donc que le tube interne soit sur toute sa longueur suffisamment gros pour laisser passer le fil et les nœuds éventuels.

Dans le même but, on connait également un dégorgeoir (FR-A-1 045 959) qui comprend un corps cylindrique massif autour duquel est immobilisé en translation mais libre en rotation, un tube.

Le corps cylindrique présente à son extrémité un guide fil, du même type que celui du premier dégorgeoir cité puisqu'il comprend, d'une part, un logement consistant en un orifice en deux parties reliées entre elles, l'une radiale et l'autre axiale, donnant au corps une forme localement tubulaire, et, d'autre part, une ouverture laissant au fil un accès vers le logement et consistant en une fente étroite raccordant l'orifice à la surface extérieur du corps.

Le tube présente quant à lui une découpe étroite débouchant dans une plus large découpe pour délimiter au bord du tube un amorce de cordon annulaire réalisant un verrou.

Il suffit alors par rotation du tube d'amener ce verrou en travers de la fente du guide fil pour interdire l'accès vers le logement ou au contraire, de dégager ce cordon et d'amener la découpe étroite au regard de la fente du guide fil pour libérer l'accès du fil vers le logement du guide fil.

Ce dégorgeoir avec guide fil sur l'élément interne autour de l'axe duquel doit de plus tourner l'élément externe a l'inconvénient de conduire à des dégorgeoirs de gros diamètre et qui n'ont donc plus assez de souplesse pour fléchir afin de suivre la courbure de la gorge du poisson.

Un résultat que l'invention vise à obtenir est un dégorgeoir permettant d'annuler tous les risques de dégagement inopiné du fil sans pour autant en gêner l'entrée dans son guide fil.

Un autre résultat que l'invention vise à obtenir est un dégorgeoir dont l'extrémité est très fine et souple et peut de ce fait fléchir afin de suivre la courbure de la gorge du poisson.

A cet effet, l'invention a pour objet un dégorgeoir du type précité notamment caractérisé en ce que:

– d'une part, le corps comprend une partie tubulaire avec, à son extrémité, le guide fil qui consiste en une branche transversale d'une fente sensiblement en «L» dont la branche longitudinale réalise l'ouverture et débouche à cet effet à l'extrémité du corps,

– d'autre part, dans la partie tubulaire du corps pourvu du guide fil, est monté un coulisseau pourvu d'un moyen de manœuvre et,

– enfin, le verrou consiste en un doigt qui est associé à l'extrémité du coulisseau et qui, au moins à son extrémité, présente lui-même un évidement axial suffisant pour laisser passage dans la partie tubulaire du corps au fil et à la hampe de l'hameçon ainsi qu'au nœud par lequel l'hameçon est fixé au fil.

Elle sera bien comprise à l'aide de la description ci-après faite, à titre d'exemple non limitatif, en regard du dessin ci-annexé qui représente schématiquement:

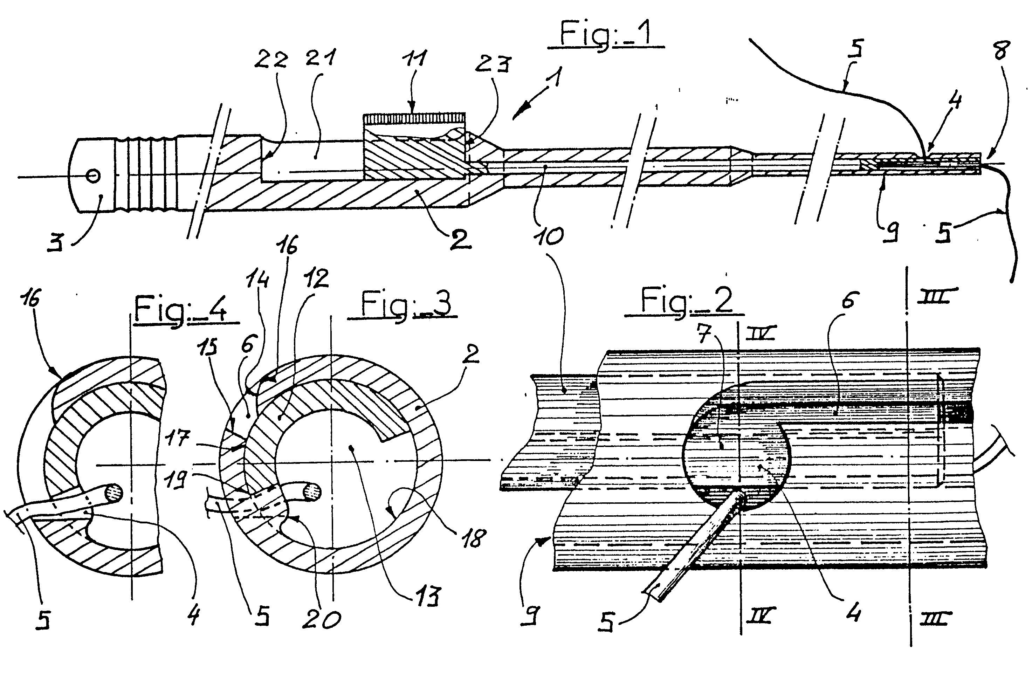

Figure 1: le dégorgeoir vu en coupe axiale,
Figure 2: à plus grande échelle, un détail du dégorgeoir,
Figure 3: une coupe selon III–III de la figure 2.
Figure 4: une coupe selon IV–IV de la figure 2.

En se reportant au dessin, on voit que le dégorgeoir 1 comprend un corps 2 dont une extrémité forme un manche 3 alors que l'autre extrémité est pourvue d'un guide fil 4 dans lequel peut être engagé le fil 5 au bout duquel est fixé l'hameçon (non représenté) que l'on veut retirer de la gorge du poisson.

Le guide fil 4 consiste, de manière connue (FR-A-1 045 959) en un logement 4 présentant une ouverture 6 par laquelle le fil accède au dit logement 4.

Le dégorgeoir comprend en outre un verrou 12 venant fermer l'ouverture 6 du guide fil 4 et qui, à cet effet, présente une section telle que, lorsqu'il est mis en position de verrouillage, il obture au moins partiellement l'ouverture 6 mais maintienne au moins partiellement dégagé le logement 4 pour y préserver une section au moins suffisante au libre coulissement du fil.

Selon une caractéristique essentielle de l'invention:

– d'une part, le corps comprend une partie tubulaire avec, à son extrémité, le guide fil 4 qui consiste en une branche transversale 4 d'une fente sensiblement en «L» 7 dont la branche longitudinale 6 réalise l'ouverture et débouche à cet effet à l'extrémité 8 du corps,

– d'autre part, dans la partie tubulaire 9 du corps 2 pourvu du guide fil 4, est monté un coulisseau 10 pourvu d'un moyen 11 de manœuvre et,

– enfin le verrou consiste en un doigt qui est associé à l'extrémité du coulisseau 10 et qui au moins à son extrémité, présente lui-même un évidement 13 suffisant pour laisser passage au fil et à la hampe de l'hameçon ainsi qu'au nœud par lequel l'hameçon est fixé au fil.

De ce fait, après son entrée dans le dégorgeoir, la hampe sera parfaitement maintenue parallèlement à l'axe du dégorgeoir ce qui, sauf si la hampe est mal engagée, facilitera la sortie de l'hameçon de la gorge, sans donc qu'il soit nécessaire de procéder à son coincement effectif.

L'un (14) au moins des bords 14, 15 de la branche longitudinale 6 de la fente en «L» 7 est incliné de manière à y faciliter l'entrée du fil en le guidant vers la dite fente. Plutôt que par une arête pouvant gêner le passage du fil, ce bord incliné 14 sera de plus raccordé à la face externe du corps 2 par un arrondi 16.

Entre le doigt 12 et la face interne 18 du corps, subsiste un interstice 17.

Pour éviter que, sous sa tension, le fil 5, qui est très fin, s'insère dans cet interstice 17, le corps porte, devant l'entrée 19 de cet interstice, un déflecteur 20, tel un bossage, déviant le fil 5 sur le côté de cette entrée 19.

Il sera bien sûr nécessaire de dégager l'ouverture 6 du guide fil 4 pour sortir le fil 5 aussi librement et rapidement qu'il sera entré, sans tension et donc sans risquer de se rompre mais il suffira pour cela de faire coulisser le verrou 12.

Consistant en un simple verrou venant intérieurement fermer au moins partiellement l'ouverture du guide fil, le doigt du coulisseau 10 peut être très fin et de ce fait, le corps peut avoir un diamètre suffisamment fin pour fléchir en suivant la courbure de la gorge du poisson.

Les moyens pour la manœuvre du coulisseau et donc du verrou consisteront par exemple, sur le manche 3, en une gorge 21 et, sur le coulisseau, en un bouton coulissant dans la dite gorge 21 dont les extrémités 22, 23 réalisent pour le verrou des butées de fin de course.

## Revendications

1. Dégorgeoir (1) comprenant un corps (2) dont une extrémité forme un manche (3) alors que l'autre extrémité est pourvue d'un guide fil (4) dans lequel peut être engagé le fil (5) au bout duquel est fixé l'hameçon que l'on veut retirer de la gorge du poisson,

lequel guide fil (4) consiste, de manière connue, en un logement (4) présentant une ouverture (6) par laquelle le fil accède au dit logement (4),

lequel dégorgeoir comprend en outre un verrou (12) venant fermer au moins partiellement l'ouverture (6) du guide fil (4) et qui, à cet effet, présente une section telle que, lorsqu'il est mis en position de verrouillage, il obture au moins partiellement l'ouverture (6) mais maintienne au moins partiellement dégagé le logement (4) pour y préserver une section au moins suffisante au libre coulissement du fil,

ce dégorgeoir étant caractérisé en ce que:
– d'une part, le corps comprend une partie tubulaire (9) avec, à son extrémité, le guide fil (4) qui consiste en une branche transversale (4) d'une fente sensiblement en «L» (7) dont la branche longitudinale (6) réalise l'ouverture et débouche à cet effet à l'extrémité (8) du corps,

– d'autre part, dans la partie tubulaire (9) du corps (2) pourvu du guide fil (4) est monté un coulisseau (10) pourvu d'un moyen (11) de manœuvre et,

– enfin, le verrou consiste en un doigt qui est associé à l'extrémité du coulisseau (10) et qui, au moins à son extrémité, présente lui-même un évidement axial (13) suffisant pour laisser passage dans la partie tubulaire du corps au fil et à la hampe de l'hameçon ainsi qu'au nœud par lequel l'hameçon est fixé au fil.

2. Dégorgeoir selon la revendication 1 dont l'un (14) au moins des bords (14, 15) de la branche longitudinale (6) de la fente en «L» (7) est incliné de manière à y faciliter l'entrée du fil en le guidant vers la dite fente, caractérisé en ce que le bord incliné (14) est raccordé à la face externe du corps (2) par un arrondi (16).

3. Dégorgeoir selon la revendication 1 ou 2 dans lequel, entre le doigt (12) et la face interne (18) du corps, subsiste un interstice (17) caractérisé en ce que, pour éviter que, sous sa tension, le fil (5) qui est très fin s'insère dans cet interstice (17), le corps porte, devant l'entrée (19) de cet interstice (17), un déflecteur (20) déviant le fil (5) sur le côté de cette entrée (19).

4. Dégorgeoir selon l'une quelconque des revendications 1 à 3 caractérisé en ce que les moyens pour la manœuvre du coulisseau et donc du verrou consistent:

– sur le manche (3), en une gorge (21) et,

– sur le coulisseau, en un bouton coulissant dans la dite gorge (21) dont les extrémités (22, 23) réalisent pour le verrou des butées de fin de course.

**Claims**

1. A disgorger (1) comprising a body (2) one end of which forms a handle (3) while the other end is provided with a line guide (4) into which the line (5) can be inserted and at its end the hook to be removed from the throat of the fish is secured, the line guide (4) comprising, in a known manner, a housing (4) with an opening (6) through which the line reaches the said housing (4), the disgorger further comprising a lock (12) which closes at least partially the opening (6) of the line guide (4) and which, for this purpose, has a section so that when it is moved to the locking position, it seals at least partially the opening (6), but keeps the housing (4) at least partially open to retain one section which is at least sufficient for the free running of the line, the disgorger being characterized in that, on the one hand, the body comprises a tubular portion (9) with, at its end, the line guide (4) which comprises a transverse branch (4) of a substantially L-shaped slot (7) the longitudinal branch (6) of which forms the opening and opens out, for this purpose, at the end (8) of the body, and on the other hand, in the tubular portion (9) of the body (2) provided with the line guide (4) a slide (10) which is provided with operating means (11) is mounted, and finally, the lock comprises a member which is associated with the end of the slide (10) and which, at least at its end, has in turn an axial recess (13) which is sufficient to allow the line access, in the tubular part of the body, to the shank of the hook and the knot via which the hook is secured to the line.

2. A disgorger according to claim 1 of which at least one (14) of the edges (14, 15) of the longitudinal branch (6) of the «L» slot (7) is inclined so as to facilitate entry of the line by guiding it towards the said slot, characterized in that the inclined edge (14) is connected to the outer face of the body (2) by a rounded portion.

3. A disgorger according to claim 1 or 2 in which there is a gap between the member (12) and the inner face (18) of the body (17), characterized in that in order to prevent the line (5), which is very fine, from engaging in this gap (17) when under tension, the body supports a deflector (20) in front of the entrance (19) to deflect the line (5) onto the side of this entrance (19).

4. A disgorger according to any one of claims 1 to 3, characterized in that the means for operating the slide and thus the lock comprise, on the handle (3), a recess (21) and, on the slide, a button which slides in the said recess (21) the ends (22, 23) of which provide travel stops for the lock.

**Patentansprüche**

1. Angelhakenlöser (1) mit einem Körper (2), dessen eines Ende einen Griff (3) bildet und dessen anderes Ende mit einer Angelschnurführung (4) versehen ist, in welcher die Schnur (5) eingesetzt werden kann, an deren Ende der Angelhaken festgelegt ist, den man aus der Kehle des Fisches entfernen will, wobei die Schnurführung (4) in an sich bekannter Weise aus einer Aufnahme (4) mit einer Öffnung (6) besteht, durch die Schnur zu der Aufnahme (4) gelangt, und wobei der Angelhakenlöser des weiteren mit einem Riegel (12) zum wenigstens teilweisen Schliessen der Öffnung (6) der Schnurführung (4) versehen ist und der hierzu einen solchen Bereich aufweist, der bei in Verriegelungslage gebrachtem Riegel zumindest teilweise die Öffnung (6) verschliesst, aber zumindest teilweise die Aufnahme (4) freihält, um dort einen zumindest zum freien Gleiten der Schnur ausreichenden Bereich sicherzustellen, dadurch gekennzeichnet,

– dass einerseits der Körper einen rohrförmigen Bereich (9) mit an seinem einen Ende der Schnurführung (4) aufweist, die aus einem Querzweig (4) eines Spaltes im wesentlichen in Form eines «L» (7) aufweist, dessen Längszweig (6) die Öffnung bildet und zu diesem Zweck am Ende (8) des Körpers mündet,

– dass anderseits der rohrförmige Bereich (9) des Körpers (2), der für die Schnurführung (4) vorgesehen ist, einen Schieber (10) aufweist, der mit einem Betätigungsmittel (11) versehen ist, und

– dass schliesslich der Riegel (12) aus einem Finger besteht, der mit dem Ende des Schiebers (10) verbunden ist, und der zumindest an seinem Ende selbst eine axiale Aussparung (13) aufweist, die der Schnur in dem rohrförmigen Bereich des Körpers und dem Schaft des Angelhakens sowie dem Knoten ausreichend Durchlass gewährt, mit welchem der Angelhaken an der Schnur festgelegt ist.

2. Angelhakenlöser nach Anspruch 1, wobei zumindest der eine (14) Rand der Ränder (14, 15) des Längszweiges (6) des Spaltes in Form eines «L» (7) derart geneigt ist, um dort den Eintritt der Schnur zu erleichtern und sie auf besagten Spalt hin führt, dadurch gekennzeichnet, dass der geneigte Rand (14) mit der äusseren Oberfläche des Körpers (2) mittels einer Abrundung (16) verbunden ist.

3. Angelhakenlöser gemäss Anspruch 1 oder 2, wobei zwischen dem Finger (12) und der inneren Oberfläche (18) des Körpers ein kleiner Spalt 17 vorhanden ist, dadurch gekennzeichnet, dass der Körper zum Verhindern, dass unter Spannung der Schnur (5), die sehr fein ist, sich diese in dem kleinen Spalt (17) einsetzt, vor dem Eingang (19) dieses kleinen Spalts (17) eine Ablenkplatte (20) vorgesehen ist, die die Schnur (5) auf die Seite dieses Eingangs (19) ablenkt.

4. Angelhakenlöser nach einem der Ansprüche 1 bis 3, dadurch gekennzeichnet, dass die Betätigungsmittel des Schiebers und demgemäss des Riegels aufweisen:
- an dem Griff (3) eine Kehle (21) und
- an dem Schieber (10) einen Knopf, der in der Kehle (21) gleitet, deren Enden (22, 23) für den Riegel Endanschläge darstellen.

Fig. 1

22  21  11  23  1  5  5  8

3  2  10  9  5  4

Fig. 4  Fig. 3  Fig. 2

16  14  16  12  7  III  6

15  6  IV

17  2  III

19  18  IV

16  9

5  4  5  20  13  9  5  4  III

0 116 504